# EUROPÄISCHE PATENTSCHRIFT

(11) **EP 2 480 372 B1**
(45) Veröffentlichungstag und Bekanntmachung des Hinweises auf die Patenterteilung: **23.08.2017**
(21) Anmeldenummer: 10757042.6
(22) Anmeldetag: 16.09.2010
(51) Int. Cl.: B23Q 5/04, B23Q 16/02

(54) **ANTRIEBSVORRICHTUNG FÜR WERKZEUGREVOLVER**
DRIVE DEVICE
DISPOSITIF D'ENTRAÎNEMENT

(30) Priorität: 25.09.2009 DE 102009042772
(43) Veröffentlichungstag der Anmeldung: 01.08.2012
(73) Patentinhaber: Sauter Feinmechanik GmbH, 72555 Metzingen (DE)
(72) Erfinder: LINDER, Dietmar, 72581 Dettingen (DE); STIEFEL, Jürgen, 72664 Kohlberg (DE)
(74) Vertreter: Bartels, Martin Erich Arthur
(86) Internationale Anmeldenummer: PCT/EP2010/005682
(87) Internationale Veröffentlichungsnummer: WO 2011/035866

(56) Entgegenhaltungen:
- WO-A1-03/000459
- US-B1- 7 475 463

## Beschreibung

Die Erfindung bezieht sich auf einen Werkzeugrevolver mit einer Antriebsvorrichtung für den wahlweisen Antrieb einer Werkzeugscheibe des Werkzeugrevolvers und mindestens eines Bearbeitungswerkzeuges, das mittels einer Halteeinrichtung an der Werkzeugscheibe festlegbar ist, mittels zweier Antriebsmittel, die von einer gemeinsamen, eine Antriebswelle aufweisenden, Antriebseinrichtung antreibbar sind, wobei die Antriebsmittel über eine jeweils von mindestens einer Betätigungseinrichtung ansteuerbaren Koppeleinrichtung mit Abtriebsmitteln verbindbar sind, die dem Antrieb der Werkzeugscheibe oder des Bearbeitungswerkzeuges dienen.

Dahingehende Werkzeugrevolver mit Antriebsvorrichtungen kommen in der industriellen Fertigung insbesondere dann zum Einsatz, wenn mittels einer gemeinsamen Antriebseinrichtung neben einem Verschwenken der Werkzeugscheibe zur Auswahl des für einen aktuellen Bearbeitungsvorgang benötigten Bearbeitungswerkzeuges auch der Antrieb eines rotierenden Bearbeitungswerkzeuges realisiert werden soll.

Aus der US 7,475,463 B1 ist bei einer spanenden Werkzeugmaschine (cutting machine) bekannt, eine gemeinsame Antriebseinrichtung wahlweise zum Antrieb einer Werkzeugscheibe oder eines rotierenden Bearbeitungswerkzeuges, welches über eine Halteeinrichtung an der Werkzeugscheibe angebracht ist, einzusetzen. So ist bei der bekannten Lösung vorgesehen, eine durch die Antriebseinrichtung angetriebene und mit zwei Antriebsmitteln in Form von axial gegeneinander versetzt angeordneten Verzahnungen versehene Welle zwecks dem wahlweisen Antrieb der Werkzeugscheibe oder des Bearbeitungswerkzeuges in eine erste bzw. zweite axiale Position zu verschieben. In der ersten axialen Position der Welle sind erste Antriebsmittel der Welle von ersten Abtriebsmitteln zum Antrieb des Bearbeitungswerkzeuges entkoppelt und zweite Antriebsmittel in Form einer Außenverzahnung sind in Eingriff mit einem Abtriebsmittel, über welches ein Verschwenken der Werkzeugscheibe bewirkt werden kann. In einer zweiten axialen Position der Welle gelangen die zum Antrieb des Bearbeitungswerkzeuges an der Welle vorgesehenen ersten Antriebsmittel in Eingriff mit den Abtriebsmitteln zum Antrieb des Bearbeitungswerkzeuges, so dass dieses in eine rotatorische Bewegung versetzt werden kann. Die bekannte Lösung baut relativ groß auf und sieht für den Antrieb der Werkzeugscheibe sowie des Bearbeitungswerkzeuges mehrere funktionsmäßig hintereinander geschaltete zusammenwirkende Verzahnungen vor, so dass bei der bekannten Lösung eine recht aufwendige Herstellung zum Erreichen der bei Werkzeugrevolvern im industriellen Einsatz erforderlichen Präzision notwendig ist.

Des Weiteren ist durch die DE 101 30 446 A1 ein Werkzeugrevolver bekannt mit
- einem mit einer Werkzeugmaschine zu verbindenden Gehäuse,
- einem elektrischen Antriebsmotor,
- einer Werkzeugscheibe, die relativ zum Gehäuse drehbar gelagert und in wählbaren Winkelstellungen festlegbar ist sowie Aufnahmen für Bearbeitungswerkzeuge aufweist, wobei
- mindestens ein Bearbeitungswerkzeug über Wellen vom Antriebsmotor antreibbar ist.

Dadurch, dass bei der bekannten Lösung der elektrische Antriebsmotor innerhalb der Werkzeugscheibe angeordnet ist und dass die Antriebswelle des elektrischen Antriebes mit der Antriebswelle des Bearbeitungswerkzeugs fluchtet oder parallel verlaufend angeordnet ist, ist ein kostengünstiges Antriebskonzept für Bearbeitungswerkzeuge bei einem Werkzeugrevolver erreicht, wobei dieses noch darüber hinaus mit einem geringem Einbauraum auskommt; jedoch benötigt auch die bekannte Lösung für den ausschließlichen Antrieb der Werkzeugscheibe mit dem integrierten Antriebsmotor für das jeweilige Bearbeitungswerkzeug ein eigenständiges Antriebsmodul, das regelmäßig im Ständer auf der Gehäuseseite der Werkzeugmaschine integriert ist.

Ausgehend von diesem Stand der Technik stellt sich die Erfindung die Aufgabe, einen Werkzeugrevolver mit einer Antriebsvorrichtung bereitzustellen, welche wie im genannten Stand der Technik den wahlweisen Antrieb einer Werkzeugscheibe und eines Bearbeitungswerkzeuges ermöglicht und darüber hinaus sich durch eine einfache, kompakte und zuverlässige Bauweise auszeichnet, die bei ihrem Betrieb den in der industriellen Fertigung geforderten geringen Fertigungstoleranzen gerecht wird.

Erfindungsgemäß ist diese Aufgabe durch einen Werkzeugrevolver gelöst, der die Merkmale des Patentanspruches 1 in seiner Gesamtheit aufweist.

Dadurch dass gemäß dem kennzeichnenden Teil des Patentanspruchs 1 zumindest die Antriebseinrichtung zusammen mit den Antriebsmitteln innerhalb der Werkzeugscheibe angeordnet sind, dass die aus einem Elektromotor bestehende Antriebseinrichtung mit ihrer Spulenwicklung auf einer Säule des Werkzeugrevolvers angeordnet ist, zu der relativ die Werkzeugscheibe schwenkbar um eine Schwenkachse gelagert ist, die senkrecht zu der Antriebswelle des Elektromotors verläuft, dass zwischen den Antriebsmitteln, die dem Antrieb der Werkzeugscheibe dienen, und der Werkzeugscheibe ein Wolfrom-Planetengetriebe angeordnet ist, über das, bei mit den zugehörigen Antriebsmitteln der Koppeleinrichtung verbundenen Abtriebsmitteln für die Werkzeugscheibe, die Übertragung der Antriebsenergie auf die Werkzeugscheibe erfolgt, ist neben einem sehr kompakten Aufbau des Weiteren erreicht, dass sowohl der Antrieb der Werkzeugscheibe als auch des Bearbeitungswerkzeuges über sehr kurze Wege insbesondere ohne Zwischenschaltung einer größeren Anzahl an Wellen erfolgt, wodurch sich eine hohe Präzision sowohl beim Verschwenken der Werkzeugscheibe als auch beim Antrieb des Bearbeitungswerkzeuges einstellt. Insbesondere in der industriellen Fertigung ist es des Weiteren vorteilhaft, dass mit der in der Werkzeugscheibe angeordneten Antriebseinheit kein weiterer Bauraum für diese außerhalb der Werkzeugscheibe benötigt ist. Durch die geringe notwendige Anzahl von An- und Abtriebsmitteln, ist eine Kostenreduktion bei der Herstellung des mit der erfindungsgemäßen Antriebsvorrichtung ausgestatteten Werkzeugrevolvers verknüpft. In der industriellen Fertigung kommt es regelmäßig insbesondere darauf an, dass das präzise Verschwenken der Werkzeugscheibe zur Auswahl des aktuell benötigten Bearbeitungswerkzeuges in möglichst kurzer Zeit erfolgt, was ebenfalls durch die innerhalb der Werkzeügscheibe angeordnete Antriebseinrichtung mit Antriebsmitteln begünstigt ist. Hiervon abweichend ist bei dem zitierten Stand der Technik in Form der US 7,475,463 B1 sowohl die Antriebseinrichtung als auch die Mehrzahl der benötigten An- und Abtriebsmittel außerhalb der Werkzeugscheibe angeordnet mit den sich hieraus ergebenden negativen Konsequenzen für den benötigten Bauraum sowie die erreichbare Präzision einer derartigen Antriebsvorrichtung.

Bei dem erfindungsgemäßen Werkzeugrevolver ist in einfacher Weise erreicht, dass die koaxial innerhalb der Spulenwicklung des Elektromotors angeordnete Antriebswelle sich senkrecht zur Schwenkachse der Werkzeugscheibe erstreckt und hiermit bereits in Richtung der Rotationsachse eines anzutreibenden Bearbeitungswerkzeuges, so dass insbesondere für den Antrieb des Bearbeitungswerkzeuges ein direkter Antrieb ohne weitere Richtungsumleitung gegeben ist.

Wolfrom-Planetengetriebe sind für die damit erreichbaren sehr großen Übersetzungsverhältnisse bekannt. Die Anwendung einer derartigen Lösung ist für die erfindungsgemäße Antriebsvorrichtung besonders vorteilhaft, da die Antriebseinrichtung zum Antreiben des Bearbeitungswerkzeuges, wie beispielsweise eines Fräsers oder Bohrers, in Abhängigkeit von dem Durchmesser des Bearbeitungswerkzeuges diesen mit sehr hohen Drehzahlen bewegen muss, wohingegen keine übermäßigen Drehmomente bei dieser Bearbeitung erforderlich sind, während für ein präzises Verschwenken der Werkzeugscheibe nur eine geringe Drehzahl, hingegen ein hohes Drehmoment erforderlich sind. So kann die Antriebseinrichtung für die hohen Drehzahlen des Bearbeitungswerkzeuges dimensioniert sein und durch das genannte Wolfrom-Planetengetriebe gegebenenfalls in Zusammenwirken mit weiteren Getriebeelementen eine geeignete Übersetzung zum Verschwenken der Werkzeugscheibe erreicht werden.

Bei einem vorteilhaften Ausführungsbeispiel ist das jeweilige Antriebsmittel zwischen Antriebseinrichtung und dem anzutreibenden Bearbeitungswerkzeug innerhalb eines Aufnahmeraumes in der Werkzeugscheibe angeordnet. Hierdurch sind nach dem Verschwenken der Werkzeugscheibe in ihre dem ausgewählten Bearbeitungswerkzeug entsprechende Stellung lediglich noch die bereits zwischen der Antriebseinrichtung und dem Bearbeitungswerkzeug angeordneten Antriebsmittel mit den dem Bearbeitungswerkzeug zugeordneten Abtriebsmitteln zu koppeln. Dergestalt kann nach dem Verschwenken der Werkzeugscheibe das ausgewählte Bearbeitungswerkzeug innerhalb kürzester Zeit angetrieben werden.

Bei einem Ausführungsbeispiel ist mittels der Betätigungseinrichtung das jeweilige Antriebsmittel koaxial zu der Antriebswelle der Antriebseinrichtung oder parallel zu dieser verschiebbar angeordnet. Durch eine koaxial verschiebbare Anordnung des jeweiligen Antriebsmittels zu der Antriebswelle wird zum einen ein möglichst geringer Bauraum beansprucht, darüber hinaus ergibt sich durch die koaxiale Anordnung ein spielfreier direkter Antrieb der Antriebsmittel durch die Antriebswelle der Antriebseinrichtung.

Bei einem bevorzugten Ausführungsbeispiel ist das zweite Antriebsmittel koaxial zum ersten Antriebsmittel innerhalb des Aufnahmeraumes in der Werkzeugscheibe angeordnet. Durch eine koaxiale Anordnung des zweiten Antriebsmittels zum ersten Antriebsmittel ist ein platzsparender Aufbau erreicht.

In einem bevorzugten Ausführungsbeispiel ist die die beiden Antriebsmittel aufweisende Koppeleinrichtung an der Antriebswelle drehfest und axial verschiebbar gegenüber dieser gelagert. Durch die drehfeste Verbindung der Koppeleinrichtung mit der Antriebswelle ist die Übertragung von Drehmomenten von der Antriebseinrichtung auf die Koppeleinrichtung gewährleistet. Durch die axiale Verschiebbarkeit der Koppeleinrichtung auf der Antriebswelle ist es möglich, für den wahlweisen Antrieb der Werkzeugscheibe oder des Bearbeitungswerkzeuges jeweils zugeordnete axiale Positionen der Koppeleinrichtung vorzusehen.

Bei einem besonders bevorzugten Ausführungsbeispiel ist mittels der Werkzeugscheibe das an ihr mittels der Halteeinrichtung festgelegte Bearbeitungswerkzeug in eine Bearbeitungsposition schwenkbar ist, bei der bei in einer Stellung betätigter Koppeleinrichtung das Antriebsmittel und das zugehörige Abtriebsmittel für den Antrieb des Bearbeitungswerkzeuges in Eingriff miteinander sind während das weitere Antriebsmittel und das zugehörige Abtriebsmittel für die Werkzeugscheibe so lange außer Eingriff miteinander sind, bis durch Betätigen der Koppeleinrichtung in die andere Stellung die Eingriffsverhältnisse sich umkehren. Hierdurch ist in einfacher und zuverlässiger Weise der wahlweise Antrieb der Werkzeugscheibe oder des Bearbeitungswerkzeuges realisiert. Vorteilhaft bei einer solchen Ausgestaltung ist, dass ein gleichzeitiger Antrieb der Werkzeugscheibe und des Bearbeitungswerkzeuges hierdurch ausgeschlossen ist, da die Koppeleinrichtung nur einen nicht betätigten oder betätigten Zustand einnehmen kann.

Bei einem bevorzugten Ausführungsbeispiel besteht die Betätigungseinrichtung aus einem hydraulischen Zylinder, der zumindest abschnittsweise von der Antriebswelle umfasst ist und im betätigten Zustand die Antriebsmittel innerhalb des Aufnahmeraumes in Richtung der Abtriebsmittel des anzutreibenden Bearbeitungswerkzeuges zustellt und im nicht betätigten Zustand in entgegengesetzter Richtung auf die Abtriebsmittel der Werkzeugscheibe zustellt. Eine Realisierung der Betätigungseinrichtung mittels eines hydraulischen Zylinders, der zumindest abschnittsweise von der Antriebswelle umfasst ist, unterstützt eine kompakte Bauweise. Auch ist durch diese Anordnung gewährleistet, dass für zylinderförmig ausgeführte Antriebsmittel auf diese von dem hydraulischen Zylinder ringförmig eine gleichverteilte Zustellkraft aufgebracht werden kann, so dass ein Verkanten oder Hemmen des Antriebsmittels beim Zustellvorgang längs der Antriebswelle weitgehend ausgeschlossen ist.

Bei einem bevorzugten Ausführungsbeispiel ist vorgesehen, dass mittels einer Verriegelungseinrichtung des Werkzeugrevolvers die Werkzeugscheibe in ihren vorgebbaren Schwenkstellungen gegenüber der Säule definiert festlegbar ist. Eine definierte Festlegung der Werkzeugscheibe in vorgebbaren Schwenkstellungen ist für eine hochpräzise Bearbeitung von Werkstücken unerlässlich, da beispielsweise bei der spanenden Bearbeitung sehr hohe Kräfte an dem Bearbeitungswerkzeug auftreten können. Selbst bei derartigen Belastungen verbleibt das Bearbeitungswerkzeug, welches mittels der Halteeinrichtung an der Werkzeugscheibe festgelegt ist, dank der Verriegelungseinrichtung stabil in seiner vorgesehenen Position. Bei einer besonders bevorzugten Ausführungsform der erfindungsgemäßen Antriebsvorrichtung ist für die Verriegelungseinrichtung eine sogenannte Hirth-Verzahnung vorgesehen, die bei einer sehr stabilen Verriegelung im verriegelten Zustand ein dennoch hinreichend hochauflösendes Verschwenken der Werkzeugscheibe wegen der Feinheit der im unverriegelten Zustand der Verriegelungseinrichtung erlaubt. Bei einer weiteren Ausführungsform der erfindungsgemäßen Antriebsvorrichtung kann für die Verriegelungseinrichtung auch eine aus dem Stand der Technik bekannte herkömmliche Bremsscheibenlösung realisiert sein.

Bei einem bevorzugten Ausführungsbeispiel ist vorgesehen, dass die Antriebs- und Abtriebsmittel aus Verzahnungen gebildet sind, die paarweise korrespondierend miteinander zusammenwirken.

Bei einem bevorzugten Ausführungsbeispiel ist vorgesehen, dass die Koppeleinrichtung zumindest abschnittsweise kreiszylinderförmig ausgebildet ist und auf ihrem Außenumfang die Antriebsmittel für die Werkzeugscheibe und entlang ihrer Mittenachse und von dieser durchgriffen die Antriebsmittel für das anzutreibende Bearbeitungswerkzeug aufweist. Eine derartige Ausbildung der Koppeleinrichtung vereinfacht insbesondere bei einer koaxialen Anordnung der Drehachse des Bearbeitungswerkzeuges zur kreiszylinderförmigen Koppeleinrichtung eine direkte Übertragung der Antriebsenergie von der Koppeleinrichtung auf das Bearbeitungswerkzeug, so dass hier nur geringe Verluste und/oder ein geringer Schlupf und somit eine sehr hohe Präzision der Drehbewegung des Bearbeitungswerkzeuges gegeben ist. Eine Anordnung der Antriebsmittel für die Werkzeugscheibe auf dem Außenumfang der kreiszylinderförmig ausgebildeten Koppeleinrichtung wiederum gestattet bei der erfindungsgemäßen Antriebsvorrichtung den Übergang auf Abtriebsmittel, welche einen größeren Durchmesser als der Außenumfang der Koppeleinrichtung aufweisen und somit lässt sich hierdurch ein für den Erhalt eines größeren Drehmoments günstiges Übersetzungsverhältnis einstellen, welches gegebenenfalls durch die Nachschaltung weiterer Getriebeelemente noch erhöht werden kann.

Bei einem bevorzugten Ausführungsbeispiel ist vorgesehen, dass eine außenumfangsseitige Verzahnung der Koppeleinrichtung eine innenumfangsseitige Verzahnung einer Ausnehmung der Antriebswelle kämmt und derart eine Kraftübertragung von der Antriebswelle auf die Koppeleinrichtung realisiert ist. Hierdurch ist eine sehr kompakte Lösung realisiert, da die Koppeleinrichtung somit zumindest abschnittsweise in der Antriebswelle aufnehmbar ist und durch die koaxiale Anordnung von Koppeleinrichtung, und Antriebswelle ist eine verlustarme und präzise Kraftübertragung von der Antriebswelle auf die Koppeleinrichtung gewährleistet.

Nachstehend ist die Erfindung anhand eines in den Zeichnungen dargestellten Ausführungsbeispiels erläutert. Es zeigen:
- Fig. 1: im Schnitt eine Teilansicht eines mit einer erfindungsgemäßen Antriebsvorrichtung versehenen Werkzeugrevolvers;
- Fig. 2: eine perspektivische Teilansicht, teilweise geschnitten, einer erfindungsgemäßen Antriebsvorrichtung in einem ersten Zustand; und
- Fig. 3: eine der Fig. 2 ähnliche Darstellung der erfindungsgemäßen Antriebsvorrichtung in einem zweiten Zustand.

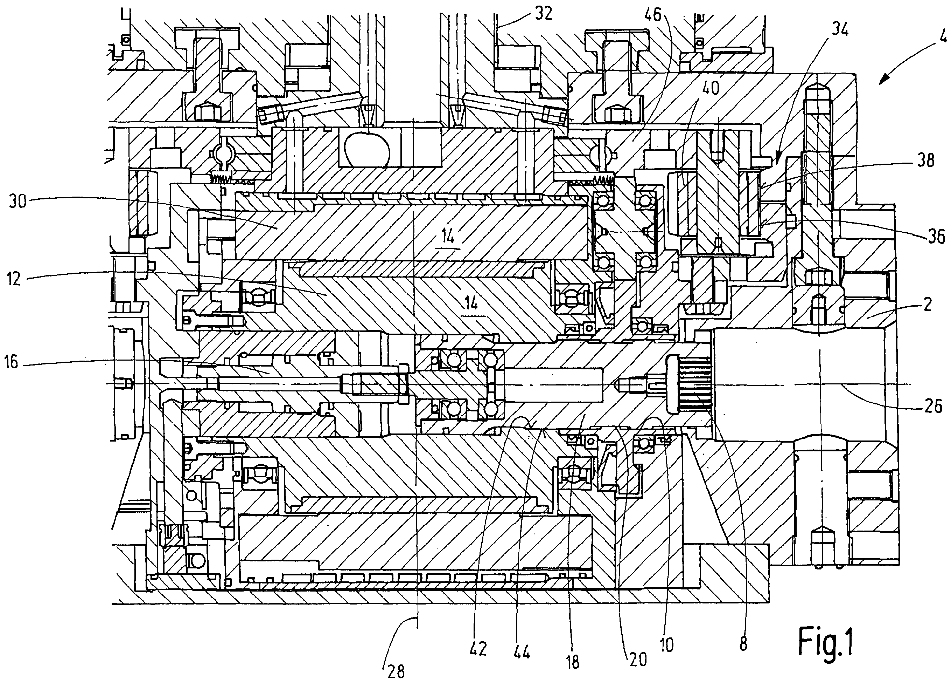

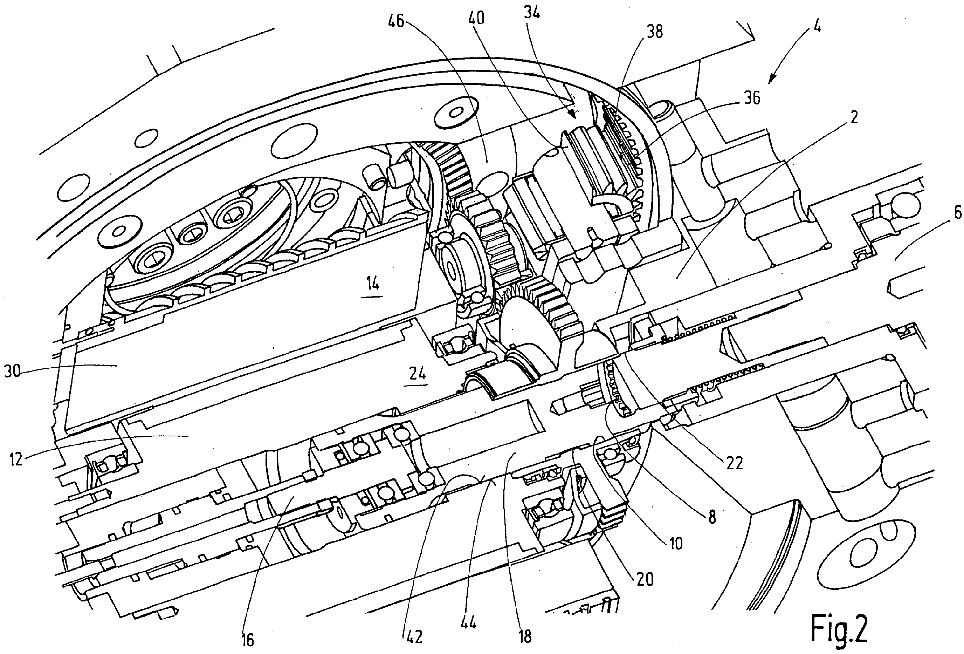

Bei der in der Fig. 1 dargestellten Antriebsvorrichtung für den wahlweisen Antrieb einer Werkzeugscheibe 2 eines Werkzeugrevolvers 4 und mindestens eines Bearbeitungswerkzeuges (nicht dargestellt), das mittels einer Halteeinrichtung 6 (s. Fig. 2) an der Werkzeugscheibe 2 festlegbar ist, erfolgt der Antrieb mittels zweier Antriebsmittel 8, 10, die von einer gemeinsamen, eine Antriebswelle 12 aufweisenden, Antriebseinrichtung 14 antreibbar sind. Die Antriebsmittel 8, 10 sind über eine jeweils von mindestens einer Betätigungseinrichtung 16 ansteuerbaren Koppeleinrichtung 18 mit Abtriebsmitteln 20, 22 verbindbar. Hierbei dient das Abtriebsmittel 20 dem Antrieb der Werkzeugscheibe 2, während das Abtriebsmittel 22 dem Antrieb des Bearbeitungswerkzeuges dient. Die Antriebseinrichtung 14 ist zusammen mit den Abtriebsmitteln 20, 22 innerhalb der Werkzeugscheibe 2 angeordnet.

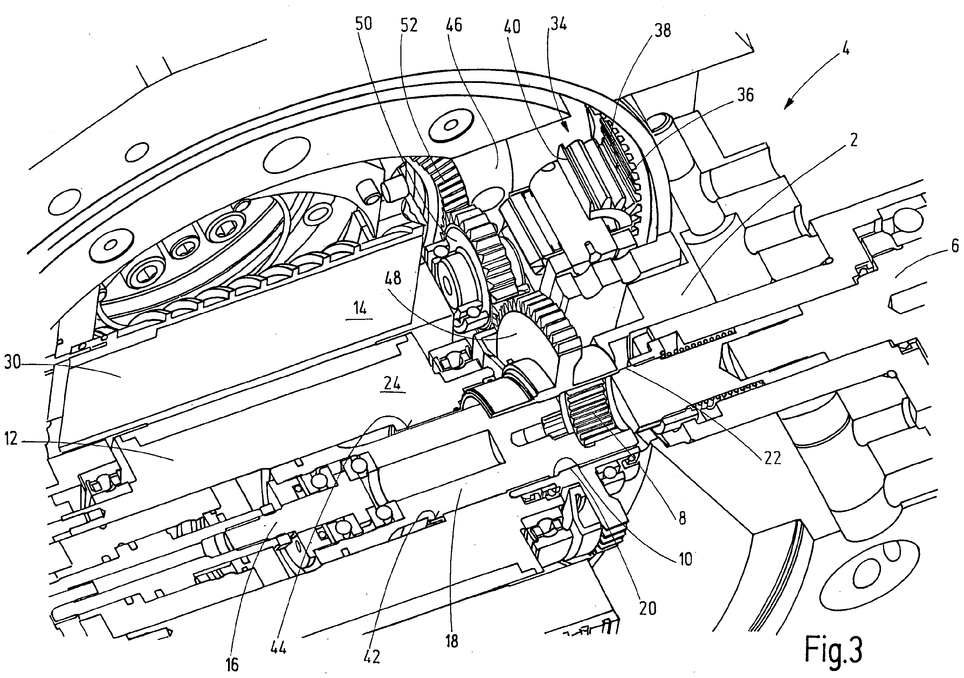

Das jeweilige Antriebsmittel 20, 22 ist zwischen der Antriebseinrichtung 14 und dem anzutreibenden Bearbeitungswerkzeug innerhalb eines Aufnahmeraumes 24 in der Werkzeugscheibe 2 angeordnet. Das Bearbeitungswerkzeug ist mittels der in den Figuren 2 und 3 dargestellten Halteeinrichtung 6 an der Werkzeugscheibe 2 festlegbar.

Mittels der Betätigungseinrichtung 16 ist das jeweilige Antriebsmittel 8, 10 koaxial zu der Antriebswelle 12 der Antriebseinrichtung 14 angeordnet. Abweichend von dem hier dargestellten Ausführungsbeispiel der erfindungsgemäßen Antriebsvorrichtung können die jeweiligen Antriebsmittel 8, 10 auch parallel zur Antriebswelle 12 der Antriebseinrichtung 14 mittels der Betätigungseinrichtung 16 verschiebbar angeordnet sein.

Das zweite Antriebsmittel 10 ist koaxial zum ersten Antriebsmittel 8 innerhalb des Aufnahmeraums 24 der Werkzeugscheibe 2 angeordnet.

Die Koppeleinrichtung 18 weist die beiden Antriebsmittel 8 und 10 auf und ist an der Antriebswelle 12 drehfest und axial in Richtung der Mittenachse 26 der Koppeleinrichtung 18 gegenüber der Antriebswelle 12 verschiebbar gelagert.

Mittels der Werkzeugscheibe 2 ist das an ihr mittels der Halteeinrichtung 6 (siehe Fig. 2) festgelegte Bearbeitungswerkzeug in eine Bearbeitungsposition um eine Schwenkachse 28 schwenkbar. In der Bearbeitungsposition der Werkzeugscheibe 2 sind bei der bei in einer Stellung gemäß Fig. 1 und 2 betätigten Koppeleinrichtung 18 das Antriebsmittel 8 und das zugehörige Abtriebsmittel 22 für den Antrieb des Bearbeitungswerkzeuges in Eingriff miteinander. Das weitere Antriebsmittel 10 und das zugehörige Abtriebsmittel 20 für die Werkzeugscheibe 2 sind solange außer Eingriff miteinander, bis durch Betätigen der Koppeleinrichtung 18 in die andere Stellung (s. Fig. 3) die Eingriffsverhältnisse sich umkehren.

Die Betätigungseinrichtung 16 besteht aus einem hydraulischen Zylinder, der zumindest abschnittsweise von der Antriebswelle 12 umfasst ist und im betätigten Zustand (Fig. 1, Fig. 2) die Antriebsmittel 8 bzw. 10 innerhalb des Aufnahmeraumes 24 in Richtung der Abtriebsmittel 22 des anzutreibenden Bearbeitungswerkzeuges zustellt und im nicht betätigten Zustand (s. Fig. 3) in entgegengesetzter Richtung auf die Abtriebsmittel 20 der Werkzeugscheibe 2 zustellt.

Die Antriebseinrichtung 14 besteht aus einem Elektromotor und ist mit ihrer Spulenwicklung 30 auf einer Säule 32 des Werkzeugrevolvers 4 angeordnet. Relativ zu der Säule 32 ist die Werkzeugscheibe 2 schwenkbar um eine Schwenkachse 28 gelagert, die senkrecht zur Antriebswelle 12 des Elektromotors verläuft.

Mittels einer in den Figuren nicht dargestellten Verriegelungseinrichtung des Werkzeugrevolvers 4 ist die Werkzeugscheibe 2 in ihren vorgebbaren Schwenkstellungen gegenüber der Säule 32 festlegbar. Hierzu kann vorgesehen sein, dass eine mit der Werkzeugscheibe 2 drehfest verbundene und mindestens einseitig mit einer Verzahnung versehene Scheibe in eine verriegelnde Eingriffsposition einer korrespondierenden Scheibe, welche ihrerseits drehfest mit der Säule 32 verbunden ist, bringbar ist. Statt einer Verriegelungsvorrichtung durch ineinandergreifende Verzahnungen kann auch eine Verriegelung in Form einer Bremsscheibe vorgesehen sein. Die dahingehenden Anordnungen sind in der Fig. 1 nicht dargestellt und sind bevorzugt mit Blick auf Fig. 1 in Richtung der Schwenkachse 28 oberhalb des in Fig. 1 dargestellten Teils des Werkzeugrevolvers 4 angeordnet.

Die Antriebsmittel 8 und 10 und die Abtriebsmittel 22 und 20 sind aus Verzahnungen gebildet, die paarweise korrespondierend miteinander zusammenwirken.

So korrespondieren bei dem gezeigten Ausführungsbeispiel die Antriebsmittel 8 mit den Abtriebsmitteln 22 des Bearbeitungswerkzeuges, und es korrespondieren die Antriebsmittel 10 mit den Abtriebsmitteln 20 der Werkzeugscheibe 2.

Zwischen den Antriebsmitteln 10, die dem Antrieb der Werkzeugscheibe 2 dienen und der Werkzeugscheibe 2 ist ein Wolfrom-Planetengetriebe 34 angeordnet, über das bei mit dem zugehörigen Antriebsmittel 10 der Koppeleinrichtung 18 verbundenen Abtriebsmittel 20 für die Werkzeugscheibe 2 die Übertragung der Antriebsenergie auf die Werkzeugscheibe 2 erfolgt.

Das Wolfrom-Planetengetriebe 34 weist eine bezüglich der Säule 32 feststehende erste Innenverzahnung 36 sowie eine bezüglich der Säule 32 gemeinsam mit der Werkzeugscheibe 2 drehbare zweite Innenverzahnung 38 sowie ein Planetenzahnrad 40 auf, das die erste und zweite Innenverzahnung 36 und 38 kämmt. Unter Bezugnahme auf die Fig. 3, die den Zustand der Antriebsvorrichtung für einen Antrieb der Werkzeugscheibe 2 darstellt, erfolgt bei durch die Antriebseinrichtung 14 in Rotation versetzter Koppeleinrichtung 18 mittels der Antriebsmittel 10 und der Abtriebsmittel 20 die Übertragung der Drehbewegung auf ein erstes Zahnrad 48, welches im Eingriff mit einem zweiten Zahnrad 50 steht. Eine bezüglich der Säule 32 (s. Fig. 1) drehbar gelagerte Scheibe 46 weist auf ihrer dem zweiten Zahnrad 50 zugewandten Seite einen umlaufenden Zahnkranz 52 auf. Eine Drehbewegung des zweiten Zahnrads 50 führt so durch Eingriff mit dem Zahnkranz 52 zu einer Drehbewegung der Scheibe 46, auf welcher das Planetenzahnrad 40 drehbar gelagert ist. Eine Drehung der Scheibe 46 führt so zu einem Ablaufen des Planetenzahnrads 40 auf den Innenverzahnungen 36 und 38 des Wolfrom-Planetengetriebes 34. Eine relativ hohe Drehzahl der Welle 12 der Antriebseinrichtung 14 kann so in eine relativ niedrige Drehzahl der Werkzeugscheibe 2 untersetzt werden. Besonders bevorzugt werden anstelle eines Planetenzahnrads 40 mehrere solcher Planetenzahnräder eingesetzt, insbesondere bevorzugt drei oder fünf.

Die Koppeleinrichtung 18 ist zumindest abschnittsweise kreiszylinderförmig ausgebildet und weist auf ihrem Außenumfang die Antriebsmittel 10 für die Werkzeugscheibe 2 und entlang ihrer Mittenachse 26 und von dieser durchgriffen die Antriebsmittel 8 für das anzutreibende Bearbeitungswerkzeug auf.

Eine Kraftübertragung von der Antriebswelle 12 auf die Koppeleinrichtung 18 erfolgt bei dem gezeigten Ausführungsbeispiel durch eine außenumfangsseitige Verzahnung 42 der Koppeleinrichtung 18, die eine innenumfangsseitige Verzahnung 44 einer Ausnehmung der Antriebswelle 12 kämmt.

## Patentansprüche

1. Werkzeugrevolver mit einer Antriebsvorrichtung für den wahlweisen Antrieb einer Werkzeugscheibe (2) des Werkzeugrevolvers (4) und mindestens eines Bearbeitungswerkzeuges, das mittels einer Halteeinrichtung (6) an der Werkzeugscheibe (2) festlegbar ist, mittels zweier Antriebsmittel (8, 10), die von einer gemeinsamen, eine Antriebswelle (12) aufweisenden, Antriebseinrichtung (14) antreibbar sind, wobei die Antriebsmittel (8, 10) über eine jeweils von mindestens einer Betätigungseinrichtung (16) ansteuerbaren Koppeleinrichtung (18) mit Abtriebsmitteln (20, 22) verbindbar sind, die wahlweise dem Antrieb der Werkzeugscheibe (2) oder des Bearbeitungswerkzeuges dienen, **dadurch gekennzeichnet, dass** zumindest die Antriebseinrichtung (14) zusammen mit den Antriebsmitteln (8, 10) innerhalb der Werkzeugscheibe (2) angeordnet ist, dass die aus einem Elektromotor bestehende Antriebseinrichtung (14) mit ihrer Spulenwicklung (30) auf einer Säule (32) des Werkzeugrevolvers (4) angeordnet ist, zu der relativ die Werkzeugscheibe (2) schwenkbar um eine Schwenkachse (28) gelagert ist, die senkrecht zu der Antriebswelle (12) des Elektromotors verläuft, dass zwischen den Antriebsmitteln (10), die dem Antrieb der Werkzeugscheibe (2) dienen, und der Werkzeugscheibe (2) ein Wolfrom-Planetengetriebe (34) angeordnet ist, über das, bei mit den zugehörigen Antriebsmitteln (10) der Koppeleinrichtung (18) verbundenen Abtriebsmitteln (20) für die Werkzeugscheibe (2), die Übertragung der Antriebsenergie auf die Werkzeugscheibe (2) erfolgt.

2. Werkzeugrevolver nach Anspruch 1, **dadurch gekennzeichnet, dass** das jeweilige Antriebsmittel (8, 10) in der Wirkverbindung zwischen der Antriebseinrichtung (14) und dem anzutreibenden Bearbeitungswerkzeug innerhalb eines Aufnahmeraumes (24) in der Werkzeugscheibe (2) angeordnet ist.

3. Werkzeugrevolver nach Anspruch 1 oder 2, **dadurch gekennzeichnet, dass** mittels der Betätigungseinrichtung (16) das jeweilige Antriebsmittel (8, 10) koaxial zu der Antriebswelle (12) der Antriebseinrichtung (14) oder parallel zu dieser verschiebbar angeordnet ist.

4. Werkzeugrevolver nach Anspruch 2, **dadurch gekennzeichnet, dass** das zweite Antriebsmittel (10) koaxial zum ersten Antriebsmittel (8) innerhalb des Aufnahmeraumes (24) in der Werkzeugscheibe (2) angeordnet ist.

5. Werkzeugrevolver nach einem der vorhergehenden Ansprüche, **dadurch gekennzeichnet, dass** die die beiden Antriebsmittel (8, 10) aufweisende Koppeleinrichtung (18) an der Antriebswelle (12) drehfest und axial verschiebbar gegenüber dieser gelagert ist.

6. Werkzeugrevolver nach einem der vorhergehenden Ansprüche, **dadurch gekennzeichnet, dass** mittels der Werkzeugscheibe (2) das an ihr mittels der Halteeinrichtung (6) festgelegte Bearbeitungswerkzeug in eine Bearbeitungsposition schwenkbar ist, bei der bei in einer Stellung betätigter Koppeleinrichtung (18) das Antriebsmittel (8) und das zugehörige Abtriebsmittel (22) für den Antrieb des Bearbeitungswerkzeuges in Eingriff miteinander sind und dass das weitere Antriebsmittel (10) und das zugehörige Abtriebsmittel (20) für die Werkzeugscheibe (2) so lange außer Eingriff miteinander sind, bis durch Betätigen der Koppeleinrichtung (18) in die andere Stellung die Eingriffsverhältnisse sich umkehren.

7. Werkzeugrevolver nach Anspruch 2, **dadurch gekennzeichnet, dass** die Betätigungseinrichtung (16) aus einem hydraulischen Zylinder besteht, der zumindest abschnittsweise von der Antriebswelle (12) umfasst ist und im einen, insbesondere betätigten Zustand die Antriebsmittel (8, 10) innerhalb des Aufnahmeraumes (24) in Richtung der Abtriebsmittel (22) des anzutreibenden Bearbeitungswerkzeuges zustellt und im anderen, insbesondere nicht betätigten Zustand in entgegengesetzter Richtung auf die Abtriebsmittel (20) der Werkzeugscheibe (2) zustellt.

8. Werkzeugrevolver nach einem der vorhergehenden Ansprüche, **dadurch gekennzeichnet, dass** mittels einer Verriegelungseinrichtung des Werkzeugrevolvers (4) die Werkzeugscheibe (2) in ihren vorgebbaren Schwenkstellungen gegenüber der Säule (32) definiert festlegbar ist.

9. Werkzeugrevolver nach einem der vorhergehenden Ansprüche, **dadurch gekennzeichnet, dass** die Antriebs- (8, 10) und Abtriebsmittel (20, 22) aus Verzahnungen gebildet sind, die im Eingriff befindlich paarweise korrespondierend miteinander zusammenwirken.

10. Werkzeugrevolver nach einem der vorhergehenden Ansprüche, **dadurch gekennzeichnet, dass** die Koppeleinrichtung (18) zumindest abschnittsweise kreiszylinderförmig ausgebildet ist und auf ihrem Außenumfang die Antriebsmittel (10) für die Werkzeugscheibe (2) und entlang ihrer Mittenachse (26) und von dieser durchgriffen die Antriebsmittel (8) für das anzutreibende Bearbeitungswerkzeug aufweist.

11. Werkzeugrevolver nach einem der vorhergehenden Ansprüche, **dadurch gekennzeichnet, dass** eine außenumfangsseitige Verzahnung (42) der Koppeleinrichtung (18) eine innenumfangsseitige Verzahnung (44) einer Ausnehmung der Antriebswelle (12) kämmt und derart eine Kraftübertragung von der Antriebswelle (12) auf die Koppeleinrichtung (18) realisiert ist.

12. Werkzeugrevolver nach einem der vorhergehenden Ansprüche, **dadurch gekennzeichnet, dass** das Wolfrom-Planetengetriebe (34) eine bezüglich einer maschinen- oder gehäuseseitigen Säule (32) feststehende erste Innenverzahnung (36) sowie eine bezüglich dieser Säule (32) gemeinsam mit der Werkzeugscheibe (2) drehbare zweite Innenverzahnung (38) sowie ein Planetenzahnrad (40) aufweist, das die erste und zweite Innenverzahnung (36, 38) kämmt.

13. Werkzeugrevolver nach einem der vorhergehenden Ansprüche, **dadurch gekennzeichnet, dass** bei durch die Antriebseinrichtung (14) in Rotation versetzter Koppeleinrichtung (18) mittels der Antriebsmittel (10) und der Abtriebsmittel (20) die Übertragung der Drehbewegung auf ein erstes Zahnrad (48) erfolgt, welches im Eingriff mit einem zweiten Zahnrad (50) steht.

14. Werkzeugrevolver nach Anspruch 12 und 13, **dadurch gekennzeichnet, dass** eine bezüglich der Säule (32) drehbar gelagerte Scheibe (46) auf ihrer dem zweiten Zahnrad (50) zugewandten Seite einen umlaufenden Zahnkranz (52) aufweist und dass eine Drehbewegung des zweiten Zahnrades (50) durch Eingriff mit dem Zahnkranz (52) zu einer Drehbewegung der Scheibe (46) führt, auf welcher das Planetenzahnrad (40) derart drehbar gelagert ist, dass eine Drehung der Scheibe (46) zu einem Ablaufen des Planetenzahnrades (40) auf den Innenverzahnungen (36, 38) des Wolfrom-Planetengetriebes (34) führt.

15. Werkzeugrevolver nach einem der vorhergehenden Ansprüche, **dadurch gekennzeichnet, dass** die Koppeleinrichtung (18) zumindest abschnittsweise kreiszylinderförmig ausgebildet und auf ihrem Außenumfang die Antriebsmittel (10) für die Werkzeugscheibe (2) und entlang ihrer Mittenachse (26) und von dieser durchgriffen die Antriebsmittel (8) für das anzutreibende Bearbeitungswerkzeug aufweist.

## Claims

1. A tool turret with a drive device for alternatively driving a tool disc (2) of the tool turret (4) and at least one machining tool which can be secured on the tool disc (2) by means of a retaining device (6), by two drive means (8, 10) which can be driven by a common drive device (14) that has a drive shaft (12), the drive means (8, 10) being able to be connected to output means (20, 22) via a coupling device (18) which can respectively be actuated by at least one actuating device (16), which output means are used for alternatively driving the tool disc (2) or the machining tool, **characterised in that** at least the drive device (14) together with the drive means (8, 10) is located within the tool disc (2), that the drive device (14) consisting of an electric motor with its coil winding (30) is located on a column (32) of the tool turret (4), relative to which column the tool disc (2) is pivot-mounted around a pivot axis (28) which runs perpendicular to the drive shaft (12) of the electric motor, that between the drive means (10) which are used to drive the tool disc (2) and the tool disc (2) there is a Wolfrom planetary gear system (34) by means of which the drive energy is transmitted to the tool disc (2) when output means (20) for the tool disc (2) are connected to the corresponding drive means (10) of the coupling device (18).

2. The tool turret according to Claim 1, **characterised in that** the respective drive means (8, 10) is located operatively connected between the drive device (14) and the machining tool which is to be driven within a receiving space (24) in the tool disc (2).

3. he tool turret according to Claim 1 or 2, **characterised in that** by means of the actuating device (16) the respective drive means (8, 10) is located coaxially to the drive shaft (12) of the drive device (14) or able to be shifted parallel to it.

4. he tool turret according to Claim 2, **characterised in that** the second drive means (10) is located coaxially to the first drive means (8) within the receiving space (24) in the tool disc (2).

5. he tool turret according to any of the preceding claims, **characterised in that** the coupling device (18) which has the two drive means (8, 10) is supported non-rotatably on the drive shaft (12) with the capacity to move axially relative to it.

6. The tool turret according to any of the preceding claims, **characterised in that** by means of the tool disc (2) the machining tool which is secured on the latter by means of the retaining device (6) can be pivoted into one machining position in which, when the coupling device (18) has been actuated in one position, the drive means (8) and the corresponding output means (22) for the driving of the machining tool engage with one another, and that the other drive means (10) and the corresponding output means (20) for the tool disc (2) are disengaged from one another until the engagement conditions are reversed by actuating the coupling device (18) into the other position.

7. he tool turret according to Claim 2, **characterised in that** the actuating device (16) consists of a hydraulic cylinder which is encompassed at least in sections by the drive shaft (12) and in one, especially actuated, state adjusts the drive means (8, 10) within the receiving space (24) in the direction of the output means (22) of the machining tool to be driven and in the other, especially non-actuated, state adjusts them in the opposite direction to the output means (20) of the tool disc (2).

8. he tool turret according to any of the preceding claims, **characterised in that** the tool disc (2) can be secured in its pre-specifiable pivoting positions relative to the column (32) by means of a locking device of the tool turret (4).

9. he tool turret according to any of the preceding claims, **characterised in that** the drive means (8, 10) and the output means (20, 22) are formed from tooth systems which interact with one another in pairs in a corresponding manner when engaged.

10. he tool turret according to any of the preceding claims, **characterised in that** the coupling device (18) is made at least in sections in the shape of a circular cylinder and on its outer circumference has the drive means (10) for the tool disc (2) and along its centre axis (26) and penetrated by it has the drive means (8) for the machining tool which is to be driven.

11. he tool turret according to any of the preceding claims, **characterised in that** an outer circumferential-side tooth system (42) of the coupling device (18) meshes with an inner circumferential-side tooth system (44) of a recess of the drive shaft (12), and in this way power is transferred from the drive shaft (12) to the coupling device (18).

12. he tool turret according to any of the preceding claims, **characterised in that** the Wolfrom planetary gear system (34) has a first internal tooth system (36) which is stationary relative to a machine-side or housing-side column (32) as well as a second internal tooth system (38) which can turn relative to this column (32) jointly with the tool disc (2), and also a planet gear (40) which meshes with the first and second internal tooth system (36, 38).

13. he tool turret according to any of the preceding claims, **characterised in that** when the coupling device (18) has been set in rotation by the drive device (14), the rotary motion is transmitted by the drive means (10) and the output means (20) to a first gear (48) which is engaged with a second gear (50).

14. The tool turret according to either of Claims 12 and 13, **characterised in that** a disc (36) which is pivot-mounted with respect to the column (32) on its side facing the second gear (50) has a circumferential rim gear (52) and that a rotary motion of the second gear (50) by engaging the gear rim (52) leads to a rotary motion of the disc (46) on which the planet gear (40) is pivot-mounted such that a rotation of the disc (46) leads to the planet gear (40) running off on the internal tooth systems (36, 38) of the Wolfrom planetary gear system (34).

15. The tool turret according to any of the preceding claims, **characterised in that** the coupling device (18) is made at least in sections in the shape of a circular cylinder and on its outer circumference has the drive means (10) for the tool disc (2) and along is centre axis (26) and penetrated by it has the drive means (8) for the machining tool which is to be driven.

## Revendications

1. Tourelle revolver comprenant un système d'entraînement pour entraîner, au choix, un disque (2) à outil de la tourelle (4) revolver et au moins un outil d'usinage, qui peut être fixé au disque (2) à outil au moyen d'un dispositif (6) de retenue, qui peuvent être entraînés à l'aide de deux moyens (8, 10) d'entraînement, qui peuvent être entraînés par un dispositif (14) d'entraînement commun ayant un arbre (12) d'entraînement, les moyens (8, 10) d'entraînement pouvant être reliés à des moyens (20, 22) de sortie par un dispositif (18) d'accouplement, pouvant être commandé chacun par au moins un dispositif (16) d'actionnement, moyens (20, 22) de sortie, qui servent à entraîner, au choix, le disque (2) à outil ou l'outil d'usinage, **caractérisée en ce qu'**au moins le dispositif (14) d'entraînement est disposé ensemble avec les moyens (8, 10) d'entraînement à l'intérieur du disque (2) à outil, **en ce que** le dispositif (14) d'entraînement, consistant en un moteur électrique, est monté, en ayant son enroulement (30) de bobine sur une colonne (32) de la tourelle (4) revolver, pivotant par rapport au disque (2) à outil autour d'un axe (8) de pivotement, perpendiculaire à l'arbre (12) d'entraînement du moteur électrique, **en ce qu'**entre les moyens (10) d'entraînement, qui servent à entraîner le disque (2) à outil, et le disque (2) à outil, est disposé un train (34) épicycloïdale Wolfrom, par lequel a lieu la transmission de l'énergie d'entraînement au disque (2) à outil, lorsque des moyens (20) de sortie pour le disque (2) à outil sont reliés aux moyens (10) d'entraînement associés du dispositif (18) d'accouplement.

2. Tourelle revolver suivant la revendication 1, **caractérisée en ce que** le moyen (8, 10) d'entraînement respectif est disposé dans la liaison active entre le dispositif (14) d'entraînement et l'outil d'usinage à entraîner dans un espace (24) de réception du disque (2) à outil.

3. Tourelle revolver suivant la revendication 1 ou 2, **caractérisée en ce qu'**au moyen du dispositif (16) d'actionnement, le moyen (8, 10) d'entraînement respectif est monté coulissant coaxialement à l'arbre (12) d'entraînement du dispositif (14) d'entraînement ou parallèlement à celui-ci.

4. Tourelle revolver suivant la revendication 2, **caractérisée en ce que** le deuxième moyen (10) d'entraînement est monté coaxialement au premier moyen (8) d'entraînement dans l'espace (24) de réception du disque (2) à outil.

5. Tourelle revolver suivant l'une des revendications précédentes, **caractérisée en ce que** le dispositif (18) d'accouplement ayant les deux moyens (8, 10) d'entraînement est monté solidaire en rotation de l'arbre (12) d'entraînement et coulissant axialement par rapport à celui-ci.

6. Tourelle revolver suivant l'une des revendications précédentes, **caractérisée en ce qu'**au moyen du disque (2) à outil, l'outil d'usinage, qui lui est fixé au moyen du dispositif (6) de retenue, peut pivoter pour venir dans une position d'usinage dans laquelle, lorsque le dispositif (18) d'accouplement est actionné dans une position, le moyen (8) d'entraînement et le moyen (22) de sortie associé sont mis en prise pour l'entraînement de l'outil d'usinage et **en ce que** l'autre moyen (10) d'entraînement et le moyen (20) de sortie associé pour le disque (2) à outil sont mis hors de prise jusqu'à ce que, par actionnement du dispositif (18) d'accouplement venant dans l'autre position, les conditions de prise s'inversent.

7. Tourelle revolver suivant la revendication 2, **caractérisée en ce que** le dispositif (16) d'actionnement consiste en un vérin hydraulique, qui est entouré au moins par tronçons de l'arbre (12) d'entraînement et, dans un état notamment actionné, fait avancer le moyen (8,10) d'entraînement dans l'espace (24) de réception en direction du moyen (22) de sortie de l'outil d'usinage à entraîner et dans l'autre état, notamment non actionné, le fait avancer dans le sens opposé au moyen (20) de sortie du disque (2) à outil.

8. Tourelle revolver suivant l'une des revendications précédentes, **caractérisée en ce qu'**au moyen d'un dispositif de verrouillage de la tourelle (4) revolver, le disque (2) à outil peut être fixé de manière définie par rapport à la colonne (32) dans ses positions de pivotement pouvant être données à l'avance.

9. Tourelle revolver suivant l'une des revendications précédentes, **caractérisée en ce que** les moyens d'entraînement (8, 10) et de sortie (20, 22) sont formés de dentures qui coopèrent entre elles de manière correspondante par paire se trouvant en prise.

10. Tourelle revolver suivant l'une des revendications précédentes, **caractérisée en ce que** le dispositif (18) d'accouplement est constitué, au moins par endroit, en forme de cylindre de section circulaire et a, sur son pourtour extérieur, les moyens (10) d'entraînement du disque (2) à outil et, le long de son axe (26) médian et traversé par celui-ci, le moyen (8) d'entraînement de l'outil d'usinage à entraîner.

11. Tourelle revolver suivant l'une des revendications précédentes, **caractérisée en ce qu'**une denture (42), du côté du pourtour extérieur du dispositif (18) d'accouplement, engrène dans une denture (44), du côté du pourtour intérieur d'un évidemment de l'arbre (12) d'entraînement, et ainsi est réalisée une transmission de force, de l'arbre (12) d'entraînement au dispositif (18) d'accouplement.

12. Tourelle revolver suivant l'une des revendications précédentes, **caractérisée en ce que** le train (34) épicycloïdal Wolfrom a une première denture (36) intérieure, fixe par rapport à une colonne (32), du côté machine ou carter, ainsi qu'une deuxième denture (38) intérieure, tournant par rapport à cette colonne (32) en commun avec le disque (2) à outil, ainsi qu'une roue (40) dentée satellite, qui engrène avec la première et la deuxième dentures (36, 38) intérieures.

13. Tourelle revolver suivant l'une des revendications précédentes, **caractérisée en ce que**, lorsque le dispositif (18) d'accouplement est mis en rotation par le dispositif (14) d'entraînement, a lieu, à l'aide du moyen (10) d'entraînement et du moyen (20) de sortie, la transmission du mouvement de rotation à une première roue (48) dentée, qui est en prise avec une deuxième roue (50) dentée.

14. Tourelle revolver suivant les revendications 12 et 13, **caractérisée en ce qu'**un disque (46), monté tournant par rapport à la colonne (32), a, du côté tourné vers la deuxième roue (50) dentée, une couronne (52) dentée faisant le tour et **en ce qu'**un mouvement de rotation de la deuxième roue (50) dentée donne, par engrènement dans la couronne (52) dentée, un mouvement de rotation du disque (46) sur lequel la roue (40) dentée satellite est montée tournante, de manière à ce qu'une rotation du disque (46) donne un passage de la roue (40) dentée satellite sur les dentures (36, 38) intérieures du train (34) épicycloïdal Wolfrom.

15. Tourelle revolver suivant l'une des revendications précédentes, **caractérisée en ce que** le dispositif (18) d'accouplement est constitué sous la forme d'un cylindre de section circulaire, au moins par endroit, et a, sur son pourtour extérieur, le moyen (10) d'entraînement du disque (2) à outil et, le long de son axe (26) médian et en étant traversé par celui-ci, le moyen (8) d'entraînement de l'outil d'usinage à entraîner.
